# EUROPEAN PATENT SPECIFICATION

(11) **EP 2 419 950 B1**
(45) Date of publication and mention of the grant of the patent: **31.10.2018**
(21) Application number: 10714518.7
(22) Date of filing: 12.04.2010
(51) Int. Cl.: H01M 4/04, H01M 4/08, H01M 4/58, H01M 6/16

(54) **METHOD FOR TREATING CATHODE ELECTRODE ASSEMBLIES**
METHODE ZUR BEHANDLUNG VON KATHODENELEKTRODENANORDNUNGEN
PROCÉDÉ DE TRAITEMENT D'UN ASSEMBLAGE CATHODE-ÉLECTRODE

(30) Priority: 14.04.2009 US 423195
(43) Date of publication of application: 22.02.2012
(73) Proprietor: Duracell U.S. Operations, Inc., Wilmington, DE 19801 (US)
(72) Inventor: POZIN, Michael, Brookfield Connecticut 06804 (US); ISSAEV, Nikolai, Nikolaevich, Woodbridge Connecticut 06525 (US); SLIGER, Michael, Dean, New Milford Connecticut 06776 (US)
(74) Representative: Hoyng Rokh Monegier LLP
(86) International application number: PCT/US2010/030726
(87) International publication number: WO 2010/120680

(56) References cited:
- JP-A- 57 152 672
- JP-A- 59 091 670
- JP-A- 2006 127 872

## Description

### FIELD OF THE INVENTION

The invention relates to a method of making lithium primary cells having an anode comprising lithium and a cathode comprising iron disulfide.

### BACKGROUND OF THE INVENTION

Primary (non-rechargeable) electrochemical cells having an anode of lithium are known and are in widespread commercial use. The anode is comprised essentially of lithium metal. One type of primary lithium cell has a cathode comprising iron disulfide (FeS₂), also known as pyrite. Such cells are designated Li/FeS₂ cells and may also include an electrolyte comprising a lithium salt such as lithium trifluoromethane sulfonate (LiCF₃SO₃) dissolved in at least one organic solvent. These cells are referenced in the art as primary lithium cells and are generally not intended to be rechargeable. These cells may be in the form of cylindrical cells, e.g., AA size or AAA size cells, or may be in the form of a prismatic cell.

The iron disulfide cathode material used in the manufacture of commercial batteries may be processed from natural pyrite ores that may inherently contain various impurities, such as S, Fe²⁺, Fe³⁺, SO₄²⁻, H⁺, and others. The impurities within the iron disulfide material may have a deleterious effect on overall cell performance when incorporated into an assembled cell. The impurities may directly react with the anode or cathode materials. Such reactions may lead to a reduction of on-shelf storage life and capacity for the assembled cell. In addition, the impurities may directly react with the electrolyte and may degrade its overall stability. This may also lead to side reactions with the anode or cathode materials that may reduce the shelf life and capacity of the cell. Consequently, the degradation of the electrolyte may generate gas that may increase internal cell pressure. Elevated cell pressure may lead to unsafe conditions due to electrolyte leakage from within the cell or venting of the cell. Furthermore, the iron from some of the contaminants may dissolve within the electrolyte and diffuse to and react with the lithium anode. This reaction may modify the surface of the lithium and may negatively impact discharge performance.

The iron disulfide cathode material used in the manufacture of commercial batteries may be inherently acidic due to the exposure of FeS₂ to various weather conditions during storage after mining, such as rain or humidity for example. After being processed to attain suitable characteristics for commercial batteries, the iron disulfide powder may be stored in appropriate packaging for an extended period of time, e.g., upwards of six months, before being used in the battery assembly process. During storage, the iron disulfide material may react with atmospheric moisture and/or air to form various impurities, such as H₂S, H₂SO₄, FeSO₄, FeSO₄·nH₂O, Fe₂(SO₄)₃, Fe₂(SO₄)₃·nH₂O, and others. When such impurities are introduced within an assembled cell, the cell's overall performance and safety features may be reduced. For example, acidic reactants may react with internal cell components, such as the current collector, anode, or other metallic cell parts, potentially decreasing cell performance and cell construction rigidity. The presence of acidic reactants may also lead to polymerization of electrolyte solvents that may negatively impact overall cell performance.

The general approach to suppress the formation of acidic products during storage is to mix buffers, by way of example calcium carbonate (CaCO₃), directly with FeS₂ powder prior to storage. For example, the inclusion of approximately 2.5 weight % CaCO₃ to FeS₂ may extend the storage time by an additional six months through neutralizing the acidic products produced when FeS₂ reacts with the moisture in the air during storage. Some of the reaction products (impurities) of the neutralization reaction, by way of example, may include: CaSO₄, CaSO₄·2H₂O, CaS, CaSO₃, and CO₂. The mixing of buffers, such as CaCO₃, with the FeS₂ powder may not be without limitation. For instance, CaCO₃ may act as an insulator that may suppress the conductivity of FeS₂ and may reduce the overall cell discharge performance, particularly at high discharge rates. In addition, the density of CaCO₃ is less than that of FeS₂. The inclusion of CaCO₃ within the cathode powder occupies volume that could be occupied by active cathode material, e.g., FeS₂, that would directly contribute to the capacity, and thus the overall performance, of an assembled battery.

There exists a need to remove impurities from electrode materials, e.g., iron disulfide, that are subsequently incorporated into an assembled battery. The inclusion of impurities may result in an electrode assembly having a relatively higher overall resistance that may reduce overall discharge performance of assembled batteries. Additionally, the inclusion of impurities may result in less volume available for active components that have a positive contribution to the overall discharge performance of assembled batteries. The invention discloses methods of removing impurities from the electrode prior to the assembly of batteries that may improve overall performance of the battery, particularly under high rate discharge conditions.
JP2006127872 discusses iron disulfide for a battery that is desirably low in heavy metal content, high in storage performance, and high in capacity. The process for production of the iron disulfide involves purifying the natural iron disulfide in such a way that the natural mineral of the iron disulfide is washed with an aqueous solution of hydrochloric acid, nitric acid, or sulfuric acid.

### SUMMARY OF THE INVENTION

One aspect of the invention features a method for treating a cathode electrode assembly. The method includes providing an electrode comprising iron disulfide. The electrode is contacted with a solution comprising acid, wherein the solution has a pH value of between 2 and 4, in a manner so as to remove impurities from the electrode. The electrode is then dried under conditions that result in a electrode moisture content of less than 2500ppm.

In some implementations, the solution comprising acid may be organic acid, inorganic acid, and mixtures thereof. In some examples, the solution comprising acid may be sulfuric acid, acetic acid, formic acid, oxalic acid, and mixtures thereof. The solution comprising acid may be exposed to ultrasonic waves at a frequency between 38kHz and 50kHz.

In some implementations, the electrode may be dried at a temperature between about 190°C and about 350°C. The electrode may be dried under vacuum. The electrode may be dried in an inert atmosphere. In some examples, the electrode may be dried in an atmosphere of Ar, N₂, and mixtures thereof.

In some implementations, the electrode may be contacted with a neutralizing solution of a pH value of about 6.5 or greater, so as to adjust the pH value of the electrode. In some examples, the neutralizing solution may be H₂O, NaOH, KOH, LiOH, Ca(OH)₂, NH₄OH, and mixtures thereof. The temperature of the neutralizing solution may be at least 16°C. The neutralizing solution may be subjected to ultrasonic waves at a frequency between 38kHz and 50kHz.

A battery can have a cathode electrode assembly treated by the method of the present invention. The method includes providing an electrode comprising iron disulfide. The electrode is contacted with a solution comprising acid in a manner so as to remove impurities from the electrode. The electrode is then dried under conditions that result in an electrode moisture content of less than 2500ppm.

### BRIEF DESCRIPTION OF THE DRAWINGS

While the specification concludes with claims particularly pointing out and distinctly claiming the subject matter which is regarded as forming the present invention, it is believed that the invention will be better understood from the following description taken in conjunction with the accompanying drawings.
FIG. 1 is a pictorial view of a cylindrical Li/FeS₂ cell.
FIG. 2 is a block diagram of a method of the present invention for removing impurities from a cathode electrode assembly.
FIG. 3 is a block diagram of another method of the present invention for removing impurities from a cathode electrode assembly.
FIG. 4 is a block diagram of a method not within the scope of the present invention for removing impurities from a cathode electrode material.
FIG. 5 is a block diagram of another method not within the scope of the present invention for removing impurities from a cathode electrode material.

### DETAILED DESCRIPTION OF THE INVENTION

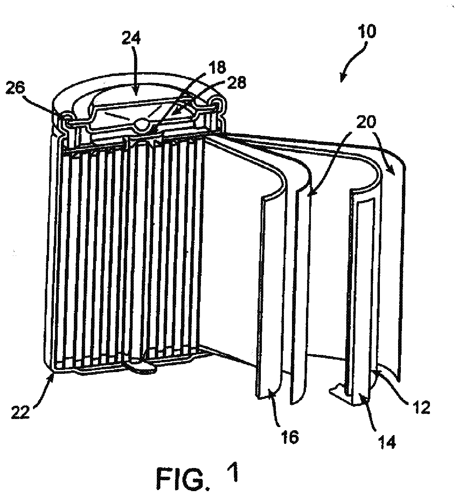

Referring to FIG. 1, a primary electrochemical cell 10 includes an anode 12 that comprises lithium in electrical contact with a negative lead 14, a cathode 16 that comprises iron disulfide in electrical contact with a positive lead 18, a separator 20, and an electrolyte. Anode 12 and cathode 16, with separator 20 disposed therebetween, may be rolled into an assembly typically referred to as a jelly roll. Anode 12, cathode 16, separator 20, and the electrolyte are contained within a housing 22. Electrochemical cell 10 further includes a cap 24 and an annular insulating gasket 26, as well as a safety valve 28. The cathode 16 preferably comprises a blend of iron disulfide, conductive carbon particles, and binder.

A cathode electrode assembly may be formed of a cathode slurry comprising iron disulfide (FeS₂) cathode active material. The term "slurry" as used herein will have its ordinary dictionary meaning and thus be understood to mean a dispersion and suspension of solid particles in liquid. This slurry may be coated onto at least one side of a substrate, e.g., an electrically conductive substrate, such as aluminum foil or stainless steel. The cathode slurry may generally be formed at ambient conditions, e.g., at about 22° C. The cathode slurry may further include conductive carbon particles, e.g., acetylene black and graphite; polymeric binder material; and solvent. The FeS₂ and carbon particles may be bound to the substrate by a polymer, which may be an elastomeric block copolymer, e.g., a styrene-ethylene/butylene-styrene (SEBS) block copolymer such as Kraton G1651 elastomer (Kraton Polymers, Houston, Texas). This polymer is a film-former, and possesses good affinity and cohesive properties for the FeS₂ particles as well as for conductive carbon particle additives in the cathode mixture. In addition, the polymer exhibits stability in electrolyte.

The coated substrate may form a wet cathode electrode assembly. The solvent may then evaporate, leaving a dry cathode coating mixture comprising the FeS₂, conductive carbon particles, and polymeric binder bound to each other and to the substrate resulting in the cathode electrode assembly. In some implementations, one side of the sheet may be coated and dried, and then the other side may be coated and dried. A coated substrate, whether it be coated on one side or on two sides, forms the cathode electrode assembly which may be subjected to calendering to compress the cathode coating on one or more sides of the substrate. On a dry basis, the cathode electrode assembly may typically contain no more than about 6% by weight binder and between about 85 and about 95% by weight of FeS₂.

The cathode electrode assembly may be manufactured using a continuous coating process, in which segments, each having the dimensions of an individual cathode, may be coated on the substrate and may be separated by uncoated areas. The uncoated areas may be referred to as "mass free zones" (MFZ), and may serve to allow the cathode tab to be welded to the substrate with high reliability. In some embodiments, the width of the MFZ may be about 11mm to about 15mm. The continuous sheet of cathode electrode assemblies may then be wound into a reel for ease of handling and further use in the manufacturing processes.

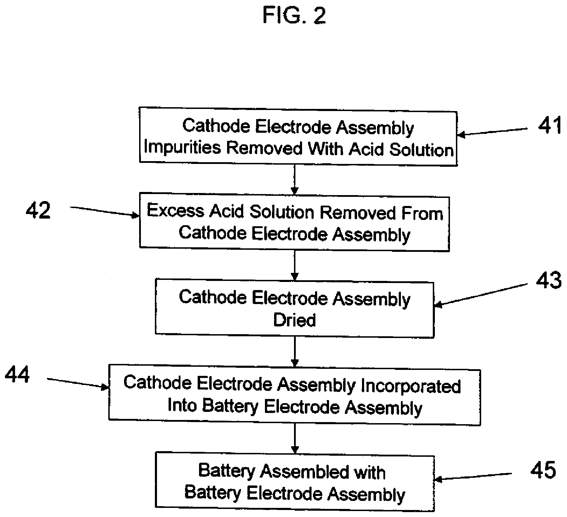

Referring to FIG. 2, a method to remove the aforementioned impurities from the cathode electrode assembly is described. The cathode electrode assembly may be contacted with a solution comprising acid 41. The cathode electrode assembly may be contacted with the solution comprising acid by various techniques, for example submerging the assembly within a solution comprising acid bath or by spraying the assembly with a solution comprising acid spray. The spray may range from a fine mist to a stream at a pressure so as not to damage the cathode electrode structure. Contacting of the cathode electrode assembly with a solution comprising acid may occur over a period of time ranging from about 30 sec to about 60 min. The solution comprising acid that contacts the cathode electrode assembly may be at a temperature of at least about 16°C. Preferably, the solution comprising acid may be at a temperature between about 20°C and about 40°C, for example at about 22°C. Elevated temperatures for the solution of acid may increase the solubility of the impurities and thus may increase the impurity removal efficiency. Temperatures that are too high, however, may lead to the degradation of the cathode material of the cathode electrode assembly. When such a cathode electrode assembly may be incorporated within an assembled cell, the performance of the cell may be reduced.

The solution comprising acid may comprise of one or more organic acids, one or more inorganic acids, or mixtures thereof. For example, the solution comprising acid may include sulfuric acid, acetic acid, formic acid, oxalic acid, and mixtures thereof. The solution of acid has a pH value of between 2 and 4. More specifically, the solution comprising acid may have a pH value of about 3.5.

The cathode electrode assembly contacted with solution comprising acid may be dried 43, for example, by being placed within an oven at elevated temperature. The oven temperature may be set, for example, between about 190°C and about 350°C. The oven temperature may be between about 250°C to about 300°C. In some instances, the atmosphere of the oven may be inert gas, e.g. Ar, N₂, and mixtures thereof, or under vacuum so as to prevent the exposure of the cathode electrode assembly to air. If the cathode electrode assembly is exposed to air at such elevated temperatures, degradation of the iron disulfide may occur and may reduce the overall performance of an assembled cell. The drying process continues for the duration of time needed to result in a cathode electrode assembly of less than 2500ppm of moisture as measured by Karl-Fischer analysis as described below. Preferably, the total moisture content of the cathode electrode assembly may be less than about 1200ppm.

Karl-Fischer analysis may be generally employed to determine moisture content of materials. The material to be analyzed may be placed within a quartz tray that may then be placed within an oven at an elevated temperature. The oven may be connected to a titration analyzer. The material may be heated at various temperatures within the oven, e.g., between about 100°C and about 300°C, depending upon the material being analyzed. A flow of nitrogen gas may carry moisture evaporated from the material in the oven into the titration analyzer. The duration of the moisture-containing nitrogen flow to the titration analyzer may vary, e.g., from about 1 min to about 60 min. The titration analyzer may be connected to a computer with software that may calculate the moisture contained within the material at the specified temperature. In some instances, several analyses may be required at various temperature settings to drive moisture from the material being analyzed. The results from the set of analyses may be combined to determine total moisture content of the material. For example, a cathode electrode assembly treated with solution comprising acid may be analyzed by Karl-Fischer analysis with an oven temperature of about 115°C for a titration period of about 10 min. The oven temperature may then be ramped to a temperature of about 300°C for a titration period of about 20 min. The titration analysis would be continuous and the total duration would be about 30 min for this example. The moisture content results of the electrode material determined at each temperature may be added to determine total moisture content of the cathode electrode assembly. A cathode electrode assembly analyzed in this manner may result in a total moisture content of less than about 2500ppm. Preferably, the cathode electrode assembly analyzed in this manner may result in a total moisture content of less than about 1200ppm.

Prior to drying the cathode electrode assembly, it is possible to remove excess solution comprising acid from the cathode electrode assembly contacted with solution comprising acid 42, for example, by being placed within an oven at elevated temperature. The oven temperature may be set, for example, between about 40°C and about 80°C. Preferably, the oven temperature may be about 60°C. In some instances, the atmosphere of the oven may be inert gas, e.g. Ar, N₂, and mixtures thereof, or under vacuum so as to prevent the exposure of the cathode electrode assembly to air at elevated temperatures. Additionally, the excess solution comprising acid may be removed by allowing the electrode assembly to remain exposed to ambient atmosphere for an extended period of time. Furthermore, the excess solution comprising acid may be removed by passing the electrode assembly under a spray of a fluid medium, such as Ar or N₂.

The resulting cathode electrode assembly may then be incorporated into a battery electrode assembly 44, e.g. a jelly roll, for construction of a battery 45. The resulting battery may have improved performance and safety characteristics in comparison with similarly constructed batteries that do not incorporate a cathode electrode assembly contacted with a solution comprising acid.

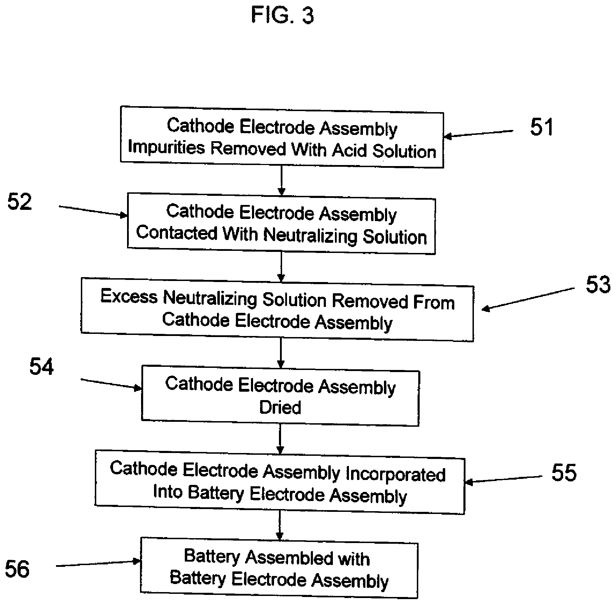

Referring to FIG. 3, another method to remove the aforementioned impurities from the cathode electrode assembly is described. The cathode electrode assembly may be contacted with a solution comprising acid 51. The cathode electrode assembly may be contacted with the solution comprising acid by various techniques, for example submerging the assembly within a solution comprising acid bath or by spraying the assembly with a solution comprising acid spray. The spray may range from a fine mist to a stream at a pressure so as not to damage the cathode electrode structure. Contacting of the cathode electrode assembly with a solution comprising acid may occur over a period of time ranging from about 30 sec to about 60 min. The solution comprising acid that is contacted with the cathode electrode assembly may be at a temperature of at least about 16°C. Preferably, the solution comprising acid may be at a temperature between about 20°C and about 40°C, for example at about 22°C. Elevated solution of acid temperatures may increase the solubility of impurities and thus may increase the impurity removal efficiency. Temperatures that are too high, however, may lead to the degradation of the cathode material of the cathode electrode assembly. When such a cathode electrode assembly may be incorporated within an assembled cell, the performance of the cell may be reduced.

The solution comprising acid may comprise of one or more organic acids, one or more inorganic acids, or mixtures thereof. For example, the solution comprising acid may include sulfuric acid, acetic acid, formic acid, oxalic acid, and mixtures thereof. The solution of acid has a pH value of between 2 and 4. More specifically, the solution comprising acid may have a pH value of about 3.5.

The cathode electrode assembly may be contacted with a neutralizing solution 52. The cathode electrode assembly may be contacted with the neutralizing solution by various techniques, for example submerging the assembly within a neutralizing solution bath or by spraying the assembly with a neutralizing solution spray. A neutralizing solution spray may range from a fine mist to a stream at a pressure so as not to damage the cathode electrode structure. Contacting of the cathode electrode assembly with a neutralizing solution may occur over a period of time ranging from about 30 sec to about 10 min. The neutralizing solution that is contacted with the cathode electrode assembly may be at a temperature of at least about 16°C. Preferably, the neutralizing solution comprising may be at a temperature between about 20°C and about 40°C, for example at about 22°C. Elevated neutralizing solution temperatures may increase the solubility of impurities and thus increase the impurity removal efficiency. If the cathode electrode assembly is exposed to neutralizing solutions at such elevated temperatures, degradation of the iron disulfide may occur and may reduce the overall performance of an assembled cell.

The neutralizing solution may include water. Preferably the water has been processed, e.g., distilled or deionized, to remove inherent impurities. Additionally, the neutralizing solution may comprise a solution of one or more hydroxides of alkali metals (Group IA), hydroxides of alkaline earth metals (Group IIA), and mixtures thereof. For example, the neutralizing solution may comprise of NaOH, KOH, LiOH, Ca(OH)₂, NH₄OH, and mixtures thereof in an aqueous solution. The neutralizing solution generally may have a pH value of about 6.5 or greater.

The cathode electrode assembly contacted with neutralizing solution may be dried 54, for example, by being placed within an oven at elevated temperature. The oven temperature may be set, for example, between about 190°C and about 350°C, preferably the oven temperature is between about 250°C and about 300°C. In some instances, the atmosphere of the oven may be inert gas, e.g., Ar, N₂, and mixtures thereof, or under vacuum so as to prevent the exposure of the cathode electrode assembly to air. If the cathode electrode assembly is exposed to air at such elevated temperatures, degradation of the iron disulfide may occur and may reduce the overall performance of an assembled cell. The drying process continues for the duration of time needed to result in a cathode electrode assembly of less than 2500ppm of total moisture as measured by Karl-Fischer, the general method and an example thereof previously described above. Preferably, the total moisture content of the cathode electrode assembly may be less than about 1200ppm.

Prior to drying the cathode electrode assembly, it is possible to remove excess neutralizing solution from the cathode electrode assembly contacted with neutralizing solution as an additional step 53, for example, by being placed within an oven at elevated temperature. The oven temperature may be set, for example, between about 40°C and about 80°C, preferably the oven temperature is about 60°C. In some instances, the atmosphere of the oven may be inert gas, e.g. Ar, N₂, and mixtures thereof, or under vacuum so as to prevent the exposure of the cathode electrode assembly to air at elevated temperatures. Additionally, the excess neutralizing solution may be removed by allowing the electrode assembly to remain exposed to ambient atmosphere for an extended period of time. Furthermore, the excess neutralizing solution may be removed by passing the electrode assembly under a spray of a fluid medium, such as Ar or N₂. In some embodiments, the cathode electrode assembly may be further washed with water, e.g., deionized or distilled, before drying to aid in the removal of the neutralizing solution.
The resulting cathode electrode assembly may then be incorporated into a battery electrode assembly 55, e.g. a jelly roll, for construction of a battery 56. The resulting battery may have improved performance and safety characteristics in comparison with similarly constructed batteries that do not incorporate a cathode electrode assembly contacted with acid solution or vapor.

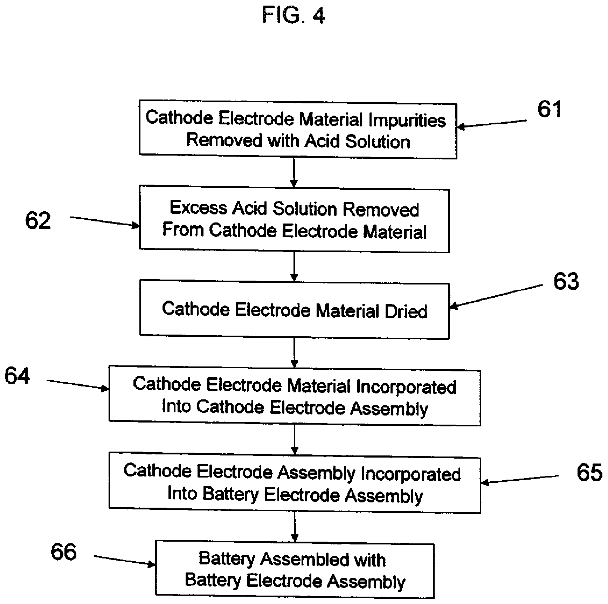

Referring to FIG. 4, a method, not according to the invention, to remove the aforementioned impurities from cathode electrode material is described. The cathode electrode material may be iron disulfide. The cathode electrode material may also be a mixture of iron disulfide and one or more buffer materials, e.g. calcium carbonate, lithium hydroxide, and mixtures thereof. Additionally, the cathode electrode material may be a mixture of iron disulfide, buffer material, and carbon particles. The cathode electrode material may be contacted with a solution comprising acid 61. The cathode electrode material may be contacted with the solution comprising acid by various techniques, for example submerging the material within a solution comprising acid bath or by spraying the material with a solution comprising acid spray. The cathode electrode material may be contacted with the solution comprising acid within a bath that may be accompanied by stirring. A solution comprising acid spray may range from a fine mist to a stream at a pressure so as not to damage the cathode electrode material. Contacting of the cathode electrode material with a solution comprising acid may occur over a period of time ranging from about 30 sec to about 60 min. The solution comprising acid that is contacted with the cathode electrode material may be at a temperature of at least about 16°C. Preferably, the solution comprising acid may be at a temperature between about 20°C and about 40°C, for example at about 22°C. Elevated solution temperatures may increase the solubility of impurities and thus may increase the impurity removal efficiency. Temperatures that are too high, however, may lead to the degradation of the cathode electrode material. When such cathode electrode material is used within a slurry and incorporated into a cathode electrode assembly that is subsequently used within an assembled cell, the performance of the cell may be reduced.

The solution comprising acid may comprise of one or more organic acids, one or more inorganic acids, or mixtures thereof. For example, the solution comprising acid may include sulfuric acid, acetic acid, formic acid, oxalic acid, and mixtures thereof. The solution of acid generally may have pH value of about 6.5 or lower. For example, the solution comprising acid may have a pH value of between about 2 and about 4. More specifically, the solution comprising acid may have a pH value of about 3.5.

The cathode electrode material contacted with solution comprising acid may be dried 63, for example, by being placed within an oven at elevated temperature. The oven temperature may be set, for example, between about 50°C and about 350°C, preferably the oven temperature is between about 60°C and about 150°C. In some instances, the atmosphere of the oven may be inert gas, such as Ar, N₂, and mixtures thereof, or under vacuum so as to prevent the exposure of the cathode material to air. If the cathode electrode material is exposed to air at such elevated temperatures, degradation of the iron disulfide may occur and may reduce the overall performance of an assembled cell. The drying process continues for the duration of time needed to result in a cathode electrode material of less than about 10,000ppm of moisture as measured by Karl-Fischer, the general method and an example thereof previously described above. Preferably, the total moisture content of the cathode electrode material may be less than about 2,000ppm.

Prior to drying the cathode electrode material, it is possible to remove excess solution comprising acid from the cathode electrode material contacted with acid solution as an additional step 62, for example, by being placed within an oven at elevated temperature. The oven temperature may be set, for example, between about 50°C and about 350°C, preferably the oven temperature is about 60°C to about 150°C. In some instances, the atmosphere of the oven may be inert gas, e.g. Ar, N₂, and mixtures thereof, or under vacuum so as to prevent the exposure of the cathode electrode material to air at elevated temperatures. Additionally, the excess solution comprising acid may be removed by allowing the cathode electrode material to remain exposed to ambient atmosphere for an extended period of time. Furthermore, the excess solution comprising acid may be removed by passing the cathode electrode material under a spray of a fluid medium, such as Ar or N₂.

The resulting cathode electrode material may then be incorporated into a cathode electrode assembly 64, e.g., cathode electrode material incorporated into a slurry that is calendered onto one side or both sides of a substrate, which may then be incorporated into a battery electrode assembly 65, e.g., a jelly roll, for construction of a battery 66. The resulting battery may have improved performance and safety characteristics in comparison with similarly constructed batteries that do not incorporate a cathode material contacted with acid.

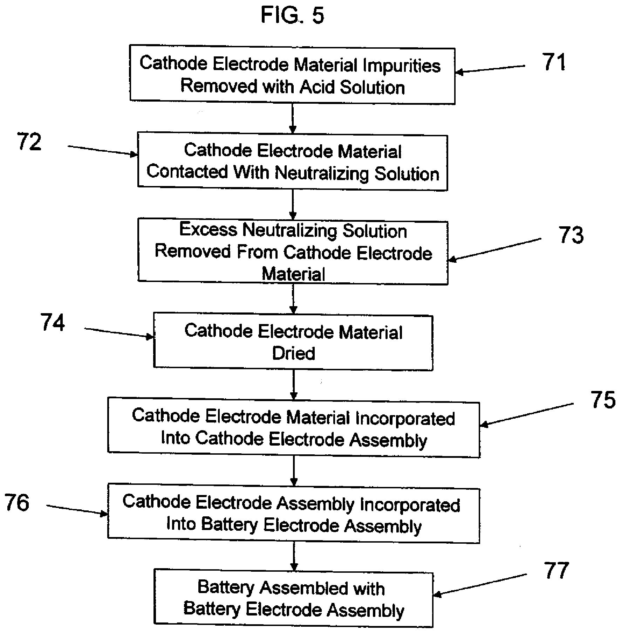

Referring to FIG. 5, another method, not according to the invention, to remove the aforementioned impurities from the cathode electrode material is described. The cathode electrode material may be iron disulfide. The cathode electrode material may also be a mixture of iron disulfide and one or more buffer materials, e.g. calcium carbonate, lithium hydroxide, and mixtures thereof. Additionally, the cathode electrode material may be a mixture of iron disulfide, buffer material, and carbon particles. The cathode electrode material may be contacted with a solution comprising acid 71. The cathode electrode material may be contacted with the solution comprising acid by various techniques, for example submerging the material within a solution comprising acid bath or by spraying the material with a solution comprising acid spray. The cathode electrode material may be contacted with the solution comprising acid within a bath that may be accompanied by stirring. A solution comprising acid spray may range from a fine mist to a stream at a pressure so as not to damage the cathode electrode structure. Contacting of the cathode electrode material with a solution comprising acid may occur over a period of time ranging from 30 sec to 60 min. The solution comprising acid that may be contacted with the cathode electrode material may be at a temperature of at least about 16°C. Preferably, the solution comprising acid may be at a temperature between about 20°C and about 40°C, for example at about 22°C. Elevated solution comprising acid temperatures may increase the solubility of impurities and thus may increase the impurity removal efficiency. Temperatures that are too high, however, may lead to the degradation of the cathode electrode material. When such cathode electrode material may be used within a slurry and incorporated into a cathode electrode assembly that may be subsequently used within an assembled cell, the performance of the cell may be reduced.

The solution comprising acid may comprise of one or more organic acids, one or more inorganic acids, or mixtures thereof. For example, the solution comprising acid may comprise of sulfuric acid, acetic acid, formic acid, oxalic acid, and mixtures thereof. The solution of acid generally may have pH value of about 6.5 or lower. For example, the solution comprising acid may have a pH value of between about 2 and about 4. More specifically, the solution comprising acid may have a pH value of about 3.5.

The cathode electrode material may be contacted with a neutralizing solution 72. The cathode electrode material may be contacted with the neutralizing solution by various techniques, for example submerging the material within a neutralizing solution bath or by spraying the material with a neutralizing solution spray. The cathode electrode material may be contacted with the neutralizing solution within a bath that may be accompanied by stirring. A neutralizing solution spray may range from a fine mist to a stream at a pressure so as not to damage the cathode electrode structure. Contacting of the cathode electrode material with a neutralizing solution may occur over a period of time ranging from about 30 sec to about 10 min. The neutralizing solution that is contacted with the cathode electrode material may be at a temperature of at least about 16°C. Preferably, the neutralizing temperature may be at a temperature between about 20°C and about 40°C, for example at about 22°C. Elevated neutralizing solution temperatures increase the solubility of impurities and thus increase the impurity removal efficiency. If the cathode electrode material is exposed to neutralizing solution at such elevated temperatures, degradation of the iron disulfide may occur and may reduce the overall performance of an assembled cell.

The neutralizing solution may include water. Preferably the water has been processed, e.g., distilled or deionized, to remove inherent impurities. Additionally, the neutralizing solution may comprise a solution of one or more hydroxides of alkali metals (Group IA), hydroxides of alkaline earth metals (Group IIA), and mixtures thereof. For example, the neutralizing solution may comprise of NaOH, KOH, LiOH, Ca(OH)₂, NH₄OH, and mixtures thereof in an aqueous solution. The neutralizing solution generally may have a pH value of about 6.5 or greater.

The cathode electrode material contacted with neutralizing solution may be dried 74, for example, by being placed within an oven at elevated temperature. The oven temperature may be set, for example, between about 50°C and about 350°C, preferably the oven temperature is between about 60°C and about 150°C. In some instances, the atmosphere of the oven may inert, e.g., Ar, N₂, and mixtures thereof, or under vacuum so as to prevent the exposure of the cathode electrode material to air. If the cathode electrode material is exposed to air at such elevated temperatures, the degradation of the iron disulfide may occur and may reduce the overall performance of an assembled cell. The drying process continues for the duration of time needed to result in a cathode electrode material of less than about 10,000ppm of total moisture as measured by Karl-Fischer, the general method and an example thereof previously described above. Preferably, the total moisture content of the cathode electrode assembly may be less than about 1200ppm.

Prior to drying the cathode electrode material, it is possible to remove excess neutralizing solution from the cathode electrode material contacted with neutralizing solution as an additional step 73, for example, by being placed within an oven at elevated temperature. The oven temperature may be set, for example, between about 40°C and about 80°C, preferably the oven temperature is about 60°C. In some instances, the atmosphere of the oven may be inert gas, e.g. Ar, N₂, and mixtures thereof, or under vacuum so as to prevent the exposure of the cathode electrode material to air. Additionally, the excess neutralizing solution may be removed by allowing the electrode material to remain exposed to ambient atmosphere for an extended period of time. Furthermore, the excess neutralizing solution may be removed by passing the electrode material under a spray of a fluid medium, such as Ar or N₂. In some embodiments, the cathode electrode material may be further washed with water, e.g., deionized or distilled, before drying to aid in the removal of the neutralizing solution.

The resulting cathode electrode material may then be incorporated into a cathode electrode assembly 74, e.g., cathode electrode material incorporated into a slurry that is calendered onto one side or both sides of a substrate, which may then be incorporated into a battery electrode assembly 75, e.g., a jelly roll, for construction of a battery 76. The resulting battery may have improved performance and safety characteristics in comparison with similarly constructed batteries that do not incorporate a cathode material contacted with acid.

Ultrasonic waves may also be used to increase the efficiency of impurity removal from the cathode electrode assembly or, not within the scope of the invention, from cathode electrode material when being submerged in a bath of a solution comprising acid, as in Fig. 2, 41; Fig. 3, 51; Fig. 4, 61; or Fig. 5, 71. For example, the cathode electrode assembly or cathode electrode material may be placed in a bath of solution comprising acid and exposed to ultrasonic waves at a frequency between about 38kHz and about 50kHz. Preferably, the ultrasonic wave frequency is about 40kHz.
Ultrasonic waves may be used to increase the efficiency of neutralization of the cathode electrode assembly or, not within the scope of the invention, of cathode electrode material when being submerged in a bath of neutralizing solution, as in Fig. 3, 52 or Fig. 5, 72. For example, the cathode electrode assembly or cathode electrode material may be placed in a bath of neutralizing solution and exposed to ultrasonic waves at a frequency between about 38kHz and about 50kHz. Preferably, the ultrasonic wave frequency may be about 40kHz.

### Example

A slurry of iron disulfide, graphite, carbon black, and Kraton is blended and coated onto both sides of an aluminum foil substrate to fabricate a cathode electrode assembly. The cathode electrode assembly is allowed to dry and then calendered to a thickness (inclusive of both sides of substrate as well as substrate) of 0.0178 cm. The composition, on a dry basis, of the cathode electrode assembly is 89% by weight of FeS₂, 7% by weight of graphite, 1% by weight carbon black, and 3% by weight of Kraton G1651.

A cathode electrode assembly is then trimmed to dimensions of 4.1 cm in width and 29.2 cm in length and then contacted with an ambient bath comprising an acid solution comprising 5% by volume acetic acid and 95% by volume deionized water for a period of 5 min for impurity removal. Ultrasonic waves at a frequency of 40kHz are applied to the acid solution bath to aid in impurity removal. The acid wash liquid is drained from the bath, and then an equivalent volume of deionized water is added to the bath as a rinse solution. This rinsing lasts 5 minutes and does not involve ultrasonic wave application. This rinse solution is drained from the bath, and then the assembly is placed in an oven set at 60°C under less than 0.1 mmHg vacuum for a period of 16 hours to remove excess water. The cathode electrode assembly has a tab welded to it, and then is placed within an oven set at 254°C under less than 0.1 mmHg vacuum for a period of 8 hours.

Moisture analysis of the cathode electrode assembly via Karl-Fischer analysis is completed after treatment via the process described in the preceding paragraph. Karl-Fischer analysis at a temperature of 115°C for 10 min exhibits a moisture content of about 150ppm. Karl-Fischer analysis at a temperature of 300°C for 20 min exhibits a moisture content of about 450ppm. The total moisture that is measured via Karl-Fischer analysis for the treated cathode electrode assembly is about 600ppm. The treated cathode electrode assembly is then incorporated into an assembled AA Li/FeS₂ cell.

Discharge performance testing follows a protocol commonly referred to as the digital camera test, or Digicam. The protocol consists of applying pulsed discharge cycles to the cell. Each cycle consists of both a 1.5 Watt pulse for 2 seconds followed immediately by a 0.65 Watt pulse for 28 seconds. After 10 consecutive pulses, the cell is then allowed to rest for a period of 55 minutes, after which the prescribed pulse regime is commenced for a second cycle. Cycles continue to repeat until a cutoff voltage of 1.05 V is reached. The total number of 1.5 Watt pulses required to reach the cutoff voltage is recorded.

A cell is assembled that includes an electrode assembly contacted with a solution comprising 5% by volume acetic acid and 95% deionized water, then neutralized with deionized water, and then dried as described above. After ambient storage followed by a pre-discharge of 3% cell capacity, Digicam testing is performed on the cell. The cell may exhibit an average of 619 pulses, an improvement of about 6% versus a cell that includes a cathode electrode assembly that is not treated according to the invention.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A method for treating a cathode electrode assembly, the method comprising the steps of:
providing an electrode comprising iron disulfide;
contacting the electrode with a solution comprising acid, wherein the solution has a pH value of between 2 and 4, in a manner so as to remove impurities from the electrode; and
drying the electrode under conditions that result in a electrode moisture content of less than 2500ppm.

2. The method of claim 1 wherein said solution comprising acid is selected from the group consisting of: organic acid, inorganic acid, and mixtures thereof.

3. The method of any of the preceding claims wherein said solution comprising acid is selected from the group consisting of: sulfuric acid, acetic acid, formic acid, oxalic acid, and mixtures thereof.

4. The method of claim 1 wherein the electrode or electrode material is contacted with said solution comprising acid in combination with ultrasonic waves at a frequency between 38kHz and 50kHz.

5. The method of claim 1 wherein the electrode or electrode material is dried under vacuum.

6. The method of claim 1 wherein the electrode or electrode material is dried in an inert atmosphere.

7. The method of claim 1 wherein the electrode or electrode material is dried in an atmosphere selected from the group consisting of: Ar, N₂, and mixtures thereof.

8. The method of claim 1 wherein the electrode or electrode material is further contacted with a neutralizing solution with a pH value of 6.5 or greater so as to adjust the pH value of the electrode.

9. The method of claim 8 where the neutralizing solution is selected from the group consisting of: H₂O, NaOH, KOH, LiOH, Ca(OH)₂, NH₄OH, and mixtures thereof.

10. The method of claim 1 where the electrode or electrode material is contacted with a neutralizing solution at a temperature of at least 16°C.

11. The method of claim 1 wherein the electrode or electrode material is contacted with said neutralizing solution in combination with ultrasonic waves at a frequency between 38kHz and 50kHz.

## Patentansprüche

1. Verfahren zur Behandlung einer Kathodenelektrodeneinheit, das Verfahren umfassend die Schritte:
Bereitstellen eines Elektrode, umfassend Eisendisulfid;
Kontaktieren der Elektrode mit einer Lösung, umfassend Säure, wobei die Lösung einen pH-Wert zwischen 2 und 4 hat, in einer Weise, dass Verunreinigungen von der Elektrode entfernt werden; und
Trocknen der Elektrode unter Bedingungen, die eine Feuchtigkeit der Elektrode von weniger als 2500 ppm ergeben.

2. Verfahren nach Anspruch 1, wobei diese Lösung, die Säure umfasst, ausgewählt ist aus der Gruppe, bestehend aus: organischer Säuren, anorganischer Säure und Mischungen hiervon.

3. Verfahren nach einem der vorstehenden Ansprüche, wobei diese Lösung, umfassend Säure, ausgewählt ist aus der Gruppe, bestehend aus: Schwefelsäure, Essigsäure, Ameisensäure, Oxalsäure und Mischungen hiervon.

4. Verfahren nach Anspruch 1, wobei die Elektrode oder das Elektrodenmaterial mit dieser Lösung, umfassend Säure in Kombination mit Ultraschallwellen mit einer Frequenz zwischen 38 kHz und 50 kHz, kontaktiert wird.

5. Verfahren nach Anspruch 1, wobei die Elektrode oder das Elektrodenmaterial im Vakuum getrocknet wird.

6. Verfahren nach Anspruch 1, wobei die Elektrode oder das Elektrodenmaterial in einer inerten Atmosphäre getrocknet wird.

7. Verfahren nach Anspruch 1, wobei die Elektrode oder das Elektrodenmaterial in einer inerten Atmosphäre getrocknet wird, ausgewählt aus der Gruppe, bestehend aus: Ar, N₂ und Mischungen hiervon.

8. Verfahren nach Anspruch 1, wobei die Elektrode oder das Elektrodenmaterial außerdem mit einer neutralisierenden Lösung mit einem pH-Wert von mindestens 6,5 kontaktiert wird, um den pH-Wert der Elektroden anzupassen.

9. Verfahren nach Anspruch 8, wobei die neutralisierende Lösung ausgewählt wird aus der Gruppe, bestehend aus: H₂O, NaOH, KOH, LiOH, Ca(OH)₂, NH₄OH und Mischungen hiervon.

10. Verfahren nach Anspruch 1, wobei die Elektrode oder das Elektrodenmaterial mit einer neutralisierenden Lösung bei einer Temperatur von mindestens 16 °C kontaktiert wird.

11. Verfahren nach Anspruch 1, wobei die Elektrode oder das Elektrodenmaterial mit dieser neutralisierenden Lösung in Kombination mit Ultraschallwellen mit einer Frequenz zwischen 38 kHz und 50 kHz, kontaktiert wird.

## Revendications

1. Procédé pour traiter un ensemble électrode cathode, le procédé comprenant les étapes consistant à :
obtenir une électrode comprenant du disulfure de fer ;
mettre en contact l'électrode avec une solution comprenant un acide, la solution ayant une valeur de pH d'entre 2 et 4, de façon à retirer des impuretés de l'électrode ; et
sécher l'électrode dans des conditions qui conduisent à une teneur en humidité d'électrode inférieure à 2500 ppm.

2. Procédé selon la revendication 1, dans lequel ladite solution comprenant un acide est choisie dans le groupe consistant en : acide organique, acide inorganique, et les mélanges de ceux-ci.

3. Procédé selon l'une quelconque des revendications précédentes, dans lequel ladite solution comprenant un acide est choisie dans le groupe consistant en : acide sulfurique, acide acétique, acide formique, acide oxalique, et les mélanges de ceux-ci.

4. Procédé selon la revendication 1, dans lequel l'électrode ou le matériau d'électrode est mis(e) en contact avec ladite solution comprenant un acide en combinaison avec des ondes ultrasonores à une fréquence entre 38 kHz et 50 kHz.

5. Procédé selon la revendication 1, dans lequel l'électrode ou le matériau d'électrode est séché(e) sous vide.

6. Procédé selon la revendication 1, dans lequel l'électrode ou le matériau d'électrode est séché(e) dans une atmosphère inerte.

7. Procédé selon la revendication 1, dans lequel l'électrode ou le matériau d'électrode est séché(e) dans une atmosphère choisie dans le groupe consistant en : Ar, N₂ et les mélanges de ceux-ci.

8. Procédé selon la revendication 1, dans lequel l'électrode ou le matériau d'électrode est encore mis(e) en contact avec une solution de neutralisation ayant une valeur de pH de 6,5 ou plus de façon à ajuster la valeur de pH de l'électrode.

9. Procédé selon la revendication 8, dans lequel la solution de neutralisation est choisie dans le groupe consistant en : H₂O, NaOH, KOH, LiOH, Ca(OH)₂, NH₄OH, et les mélanges de ceux-ci.

10. Procédé selon la revendication 1, dans lequel l'électrode ou le matériau d'électrode est mis(e) en contact avec une solution de neutralisation à une température d'au moins 16°C.

11. Procédé selon la revendication 1, dans lequel l'électrode ou le matériau d'électrode est mis(e) en contact avec ladite solution de neutralisation en combinaison avec des ondes ultrasonores à une fréquence entre 38 kHz et 50 kHz.
